(19) Europäisches Patentamt / European Patent Office / Office européen des brevets

(11) **EP 2 945 272 B1**

(12) **FASCICULE DE BREVET EUROPEEN**

(45) Date de publication et mention
de la délivrance du brevet:
**08.05.2019 Bulletin 2019/19**

(51) Int Cl.:
***H02M 7/483*** *(2007.01)*

(21) Numéro de dépôt: **15163313.8**

(22) Date de dépôt: **13.04.2015**

(54) **CONVERTISSEUR DE PUISSANCE MULTI-NIVEAUX**

MEHRSTUFIGER LEISTUNGSWANDLER

MULTI-LEVEL POWER CONCERTER

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **13.05.2014 FR 1454238**

(43) Date de publication de la demande:
**18.11.2015 Bulletin 2015/47**

(73) Titulaire: **Schneider Toshiba Inverter Europe SAS
27120 Pacy sur Eure (FR)**

(72) Inventeur: **Lavieville, Jean-Paul
78470 Saint Lambert des Bois (FR)**

(74) Mandataire: **Dufresne, Thierry et al
Schneider Electric Industries SAS
Service Propriété Industrielle
35 rue Joseph Monier - CS 30323
92506 Rueil-Malmaison Cedex (FR)**

(56) Documents cités:
- FANG ZHENG PENG: "A GENERALIZED MULTILEVEL INVERTER TOPOLOGY WITH SELF VOLTAGE BALANCING", IEEE TRANSACTIONS ON INDUSTRY APPLICATIONS, IEEE SERVICE CENTER, PISCATAWAY, NJ, US, vol. 37, no. 2, 1 mars 2001 (2001-03-01), pages 611-618, XP001225674, ISSN: 0093-9994, DOI: 10.1109/28.913728
- WANG KUI ET AL: "A Four-level Hybrid-Clamped Converter With Natural Capacitor Voltage Balancing Ability", IEEE TRANSACTIONS ON POWER ELECTRONICS, INSTITUTE OF ELECTRICAL AND ELECTRONICS ENGINEERS, USA, vol. 29, no. 3, 1 mars 2014 (2014-03-01), pages 1152-1162, XP011527242, ISSN: 0885-8993, DOI: 10.1109/TPEL.2013.2262834 [extrait le 2013-09-18]
- FANG Z PENG ET AL: "Recent advances in multilevel converter/inverter topologies and applications", 2010 INTERNATIONAL POWER ELECTRONICS CONFERENCE : IPEC-SAPPORO 2010 - [ECCE ASIA] ; SAPPORO, JAPAN, IEEE, PISCATAWAY, NJ, USA, 21 juin 2010 (2010-06-21), pages 492-501, XP031729761, ISBN: 978-1-4244-5394-8
- BUSQUETS-MONGE S ET AL: "A Multilevel Active-Clamped Converter Topology Operating Principle", IEEE TRANSACTIONS ON INDUSTRIAL ELECTRONICS, IEEE SERVICE CENTER, PISCATAWAY, NJ, USA, vol. 58, no. 9, 1 septembre 2011 (2011-09-01), pages 3868-3878, XP011383118, ISSN: 0278-0046, DOI: 10.1109/TIE.2010.2098376

**Description**

**DOMAINE TECHNIQUE**

La présente invention concerne les convertisseurs de puissance multi-niveaux plus particulièrement destinés à fonctionner dans le domaine de la moyenne tension.

**ÉTAT DE LA TECHNIQUE ANTÉRIEURE**

Les convertisseurs de puissance moyenne tension connus utilisent généralement des interrupteurs à semi-conducteurs mis en série pour permettre une montée en tension. La difficulté majeure de la mise en série de ces interrupteurs à semi-conducteurs est d'obtenir des tensions identiques aux bornes de tous ces interrupteurs à semi-conducteurs à chaque instant. Si des surcharges transitoires ou permanentes apparaissent, la destruction des interrupteurs à semi-conducteurs peut intervenir.

Des techniques basées sur l'entrelacement des commandes des interrupteurs associées à l'utilisation de transformateurs se sont développées, elles permettent de gérer la répartition des tensions et de reconstituer les formes d'ondes. Mais les transformateurs ont un coût non négligeable et ils empêchent la réalisation de convertisseurs compacts.

Une autre solution est apparue, il s'agit des cellules de type NPC (pour neutral point clamped ou clampage par le neutre) avec deux paires d'interrupteurs à semi-conducteur en série, deux diodes en série connectées d'un côté au point commun entre les deux interrupteurs de la première paire et de l'autre au point commun entre les deux interrupteurs de la seconde paire. On trouve de plus, une série de deux condensateurs connectée aux bornes de l'ensemble formé par les paires d'interrupteurs à semi-conducteurs. Le point commun entre les deux diodes en série est relié au point commun entre les deux condensateurs de la série.

Ce type de cellule conduit à une forme d'onde satisfaisante et à une réduction des contraintes de tension sur les interrupteurs à semi-conducteurs. Par contre, il peut se produire des déséquilibres de la tension aux bornes des condensateurs.

Des améliorations de la topologie originale NPC sont intervenues, en remplaçant les deux diodes par une paire d'interrupteurs à semi-conducteurs. Cette topologie est dénommée ANPC à 3 niveaux de tension.

Pour augmenter encore le niveau de tension acceptable, il a été proposé de mettre plus d'interrupteurs en série et d'ajouter des condensateurs, ce qui conduit à la topologie dénommée ANPC à 5 niveaux de tension. Les cellules de type ANPC 5 niveaux de tension sont actuellement limitées à des niveaux de tension de l'ordre de 6,9 kV, ce qui n'est pas forcément suffisant.

On connait aussi des convertisseurs multi-niveaux modulaires (MMC pour modular multilevel converter) dans lesquels chaque bras à monter aux bornes d'une source de tension continue comporte deux ensembles en série, ayant une borne commune à relier à une source de courant alternative. Chaque ensemble comporte plusieurs modules, chacun formé d'au moins deux interrupteurs élémentaires en série et d'un condensateur connecté en parallèle avec eux. Une connexion est réalisée entre le point commun aux deux interrupteurs élémentaires d'un module et une extrémité de la série d'interrupteurs élémentaires d'un module voisin. En fonction de l'état passant ou bloqué des interrupteurs élémentaires d'un module, le condensateur est court-circuité ou dans le circuit. Les condensateurs ont la même valeur et une tenue en tension identique égale au rapport entre la tension continue appliquée à un bras divisée par le nombre de modules du bras. La valeur des condensateurs dépend de la fréquence du signal de sortie côté alternatif dans le cas d'un fonctionnement en onduleur ou du signal d'entrée dans le cas d'un fonctionnement en redresseur. Leur tenue en tension est limitée ce qui permet de limiter les surtensions générées par leurs inductances parasites. Dans le cas d'un variateur de vitesse, la fréquence d'alimentation d'un moteur varie de zéro à la valeur nominale, ce qui fait qu'il n'est pas possible d'avoir un condensateur de valeur raisonnable.

Il a aussi été proposé de réaliser des cellules de type à condensateur flottant, connues également sous la dénomination de cellules élémentaires imbriquées. Une telle cellule de type à condensateur flottant permet de relier une source de tension à une source de courant en associant un nombre quelconque de cellules élémentaires en série. Chaque cellule élémentaire comporte deux interrupteurs à semi-conducteur en série et un condensateur relie entre elles deux cellules élémentaires voisines à la manière d'une échelle. Cette solution présente toutefois des inconvénients liés à la présence du condensateur flottant entre deux cellules élémentaires. Plus le nombre de cellules élémentaires augmente, plus le surcoût lié aux condensateurs augmente et plus la quantité d'énergie stockée dans ces condensateurs est importante. Les condensateurs ont la même valeur, mais des tenues en tension différentes, la tenue en tension augmente avec le rang de la cellule élémentaire, elle vaut $kE/n$ $k$ étant le rang de la cellule élémentaire, $n$ étant le nombre total de cellules élémentaires et $E$ la tension appliquée en entrée de la cellule élémentaire de rang un. La valeur des condensateurs est essentiellement liée à la fréquence de découpage. La taille des condensateurs est d'autant plus grande que leur tenue en tension est élevée. Il en est de même pour l'inductance parasite qu'ils possèdent. Ces inductances parasites sont à l'origine de surtensions de commutation, des surtensions plus élevées vont donc apparaitre sur les cellules élémentaires de rang élevé.

Dans les articles [1], [2] dont les références se trouvent en fin de description, il a été proposé une cellule à trois interrupteurs à semi-conducteurs en série permettant d'obtenir 4 niveaux de tension incluant une cellule de type à condensateur flottant. Elle est toutefois limitée actuellement, avec les interrupteurs à semi-conducteurs existants, à des niveaux de tension de l'ordre de 6,6 kV ce qui n'est pas suffisant dans certaines applications, ce niveau ne correspondant qu'à une fraction de la plage utile de la moyenne tension. Le nombre de niveaux de tension agit sur la tenue dans le temps des isolants d'un moteur qui sera alimenté par la cellule. Plus le nombre des niveaux de tension est petit, plus la durée de vie des isolants est réduite. Ils sont soumis à des paliers de tension d'amplitude importante.

## EXPOSÉ DE L'INVENTION

La présente invention a pour but de proposer un convertisseur multi-niveaux pouvant travailler à des niveaux de tension supérieurs à ceux de l'art antérieur, sans avoir besoin de recourir aux transformateurs, ni de multiplier le nombre d'interrupteurs à semi-conducteurs mis en série.

Un autre but de l'invention est de proposer un convertisseur multi-niveaux qui est moins cher et plus fiable que les convertisseurs multi-niveaux de l'art antérieur, pour un niveau de tension donné.

Encore un autre but de l'invention est de proposer un convertisseur multi-niveaux qui utilise des lots de condensateurs standards de tenue en tension limitée.

Un but supplémentaire de l'invention est de proposer un convertisseur multi-niveaux qui limite l'apparition d'inductances parasites et leur influence.

Pour y parvenir la présente invention propose de réaliser un convertisseur multi-niveaux comportant au moins un bras formé de plusieurs étages de rang un à n (n entier supérieur à un) montés en cascade, l'étage de rang 1 étant destiné à être connecté à une source de courant et l'étage de rang n étant destiné à être connecté à une source de tension. L'étage de rang un comporte une unique structure de commutation à quatre niveaux de tension. Un étage de rang i (i compris entre deux et n) comporte i structures de commutation à quatre niveaux de tension identiques montées en série. Chacune de ces structures de commutation comporte une cellule de type à condensateur flottant à trois niveaux de tension comprenant un quadruplet d'interrupteurs élémentaires en série possédant un noeud milieu, deux cellules de base formées chacune d'une paire d'interrupteurs élémentaires en série présentant deux bornes extrêmes et un point milieu et un pont diviseur capacitif ayant deux extrémités comportant un triplet de dispositifs de stockage d'énergie montés en série parmi lesquels deux dispositifs de stockage d'énergie sont en position extrême. Chaque dispositif de stockage d'énergie en position extrême est connecté aux bornes extrêmes d'une cellule de commutation de base différente, un point milieu de chaque cellule de commutation de base est connecté à une extrémité différente du quadruplet d'interrupteurs élémentaires. Le noeud milieu de chaque cellule de type à condensateur flottant de l'étage de rang i est connecté à une extrémité du pont diviseur capacitif d'une structure de commutation à quatre niveaux de tension de l'étage de rang i-1.

Le convertisseur ainsi défini permet d'atteindre un niveau de tension de l'ordre de 13,8 kV avec des interrupteurs de tenue en tension limitée (6,5 kV) disponibles actuellement, en limitant le nombre d'étages à deux et donc en utilisant seulement six interrupteurs élémentaires en série.

Pour équilibrer en tension les structures de commutation à quatre niveaux de tension, les dispositifs de stockage d'énergie d'un même pont diviseur capacitif ont une même capacité de stockage d'énergie et une même tenue en tension.

Pour respecter les règles de connexion entre source de tension et source de courant, le noeud milieu d'au moins une cellule de type à condensateur flottant de l'étage de rang i est connecté à une extrémité du pont diviseur capacitif de l'étage de rang i-1 via une inductance.

Lorsque plusieurs inductances relient l'étage de rang i à l'étage de rang i-1, ces inductances ont une même valeur.

Les deux paires d'interrupteurs élémentaires des deux cellules de commutation de base d'un même étage possèdent une même fonction de commutation.

En fonctionnement, les interrupteurs élémentaires d'une même paire sont toujours dans des états complémentaires à une valeur de temps mort près.

Dans le quadruplet d'interrupteurs élémentaires d'une cellule de type à condensateur flottant, deux sont en position extrême et deux sont en position médiane, les deux interrupteurs élémentaires en position extrême sont toujours dans des états complémentaires et les deux interrupteurs élémentaires en position médiane sont toujours dans des états complémentaires, l'un étant passant et l'autre étant bloqué.

Les interrupteurs élémentaires comportent chacun un commutateur électronique de puissance commandable associé avec une diode connectée en antiparallèle.

Les dispositifs de stockage d'énergie sont choisis parmi un condensateur, une batterie, une pile à combustible.

La présente invention concerne également un variateur de vitesse comportant une cascade avec un convertisseur ainsi caractérisé fonctionnant en redresseur AC/DC et un convertisseur ainsi caractérisé fonctionnant en onduleur DC/AC, reliés entre eux par leurs côtés continu par l'intermédiaire d'une source de tension.

## BRÈVE DESCRIPTION DES DESSINS

La présente invention sera mieux comprise à la lecture de la description d'exemples de réalisation donnés à titre purement indicatif et nullement limitatif en faisant référence aux dessins annexés sur lesquels :

- la figure 1A illustre, de manière très schématique, un bras de convertisseur multi-niveaux objet de l'invention avec n étages montés en cascade, la figure 1B est un convertisseur multi-niveaux monophasé comportant deux bras similaires à celui de la figure 1A;
- la figure 2 montre une des structures de commutation à 4 niveaux de tension du convertisseur multi-niveaux objet de l'invention ;
- la figure 3A montre un bras d'un convertisseur objet de l'invention à deux étages dans un fonctionnement d'onduleur et la figure 3B montre un bras d'un convertisseur objet de l'invention à deux étages dans un fonctionnement de redresseur ;

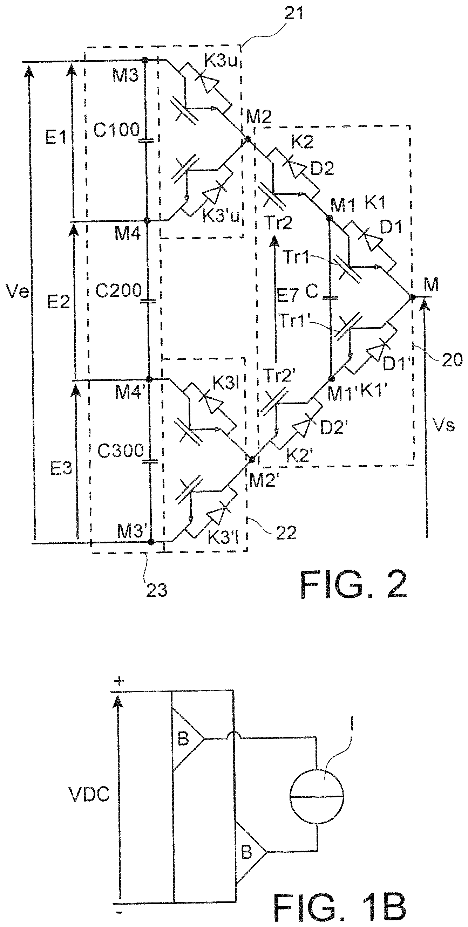

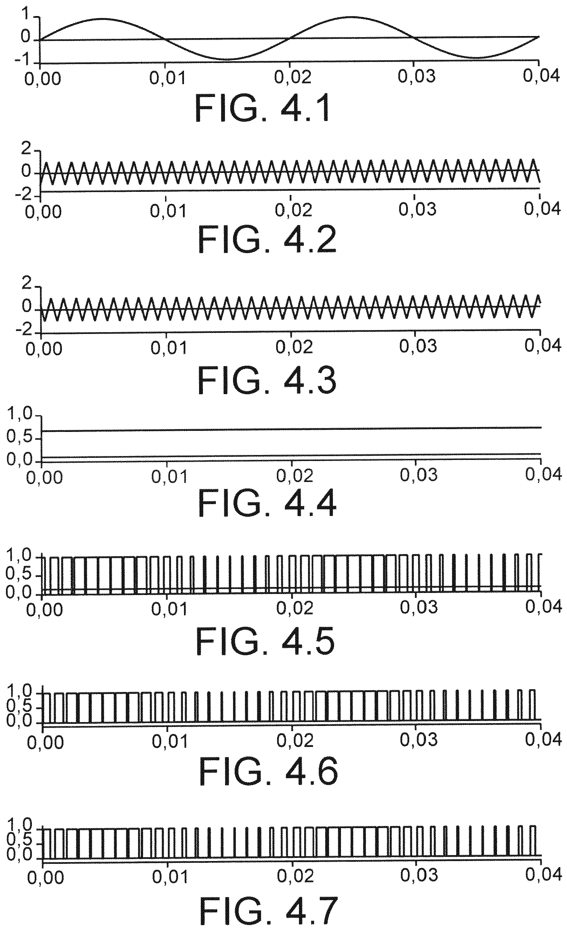

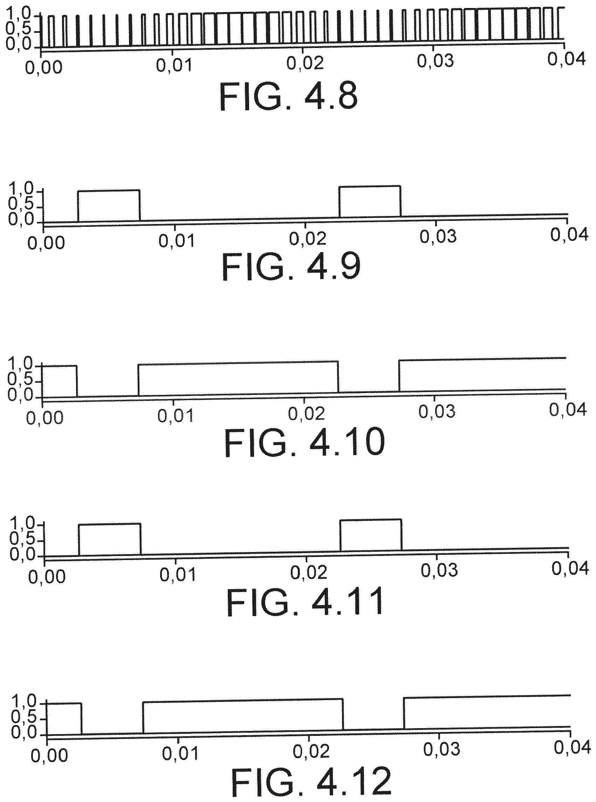

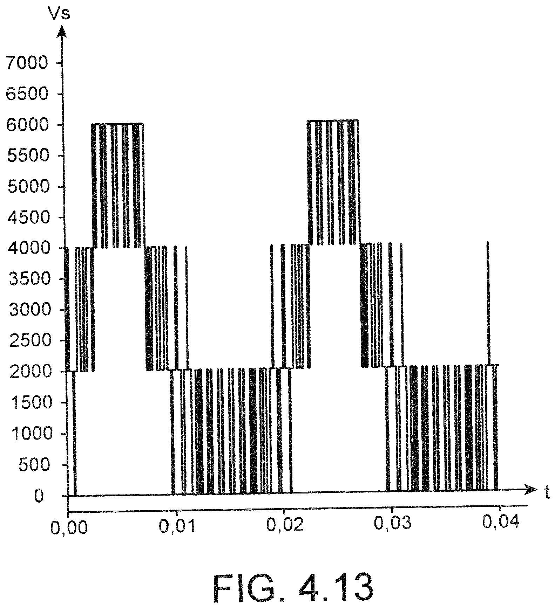

- les figures 4.1 à 4.13 illustrent des chronogrammes du signal de consigne Vref (Fig. 4.1), des porteuses utilisées avec la tension de consigne Vref pour la commande des interrupteurs élémentaires de la structure de commutation à 4 niveaux de tensions de la figure 2 : K1, K1' (Fig. 4.2), K2, K2' (Fig. 4.3), K3u, K3'u, K3l, K3'l (Fig. 4.4), des signaux de commande des interrupteurs élémentaires de la structure de commutation à 4 niveaux de tensions de la figure 2 : K1 (Fig. 4.5), K1' (Fig. 4.6), K2 (Fig. 4.7), K2' (Fig. 4.8), K3u (Fig. 4.9), K3'u (Fig. 4.10), K3l (Fig. 4.11), K3'l (Fig. 4.12), de la tension de sortie Vs de la structure de commutation à 4 niveaux de tension (Fig. 4.13), dans un fonctionnement de conversion DC/AC;

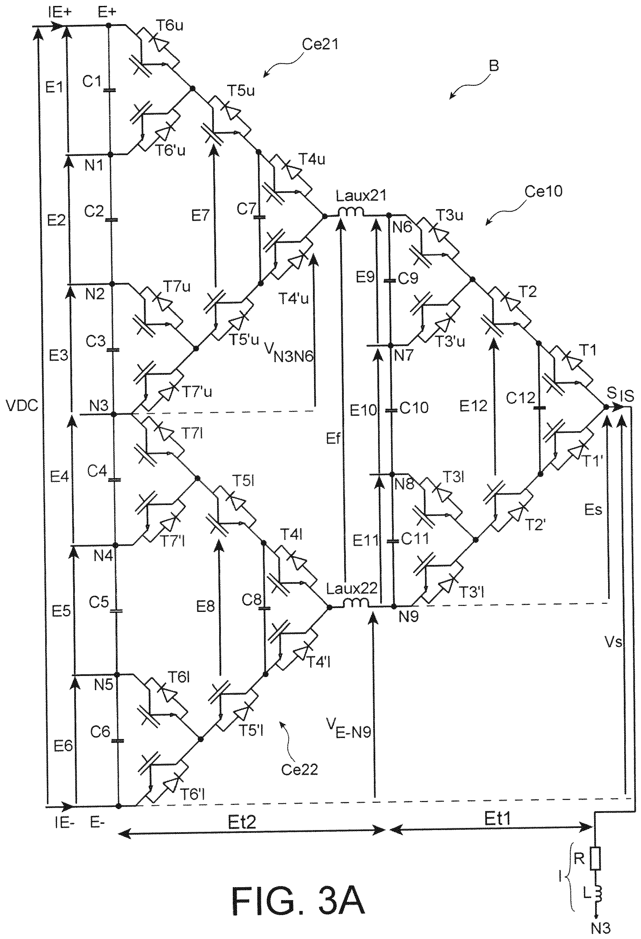

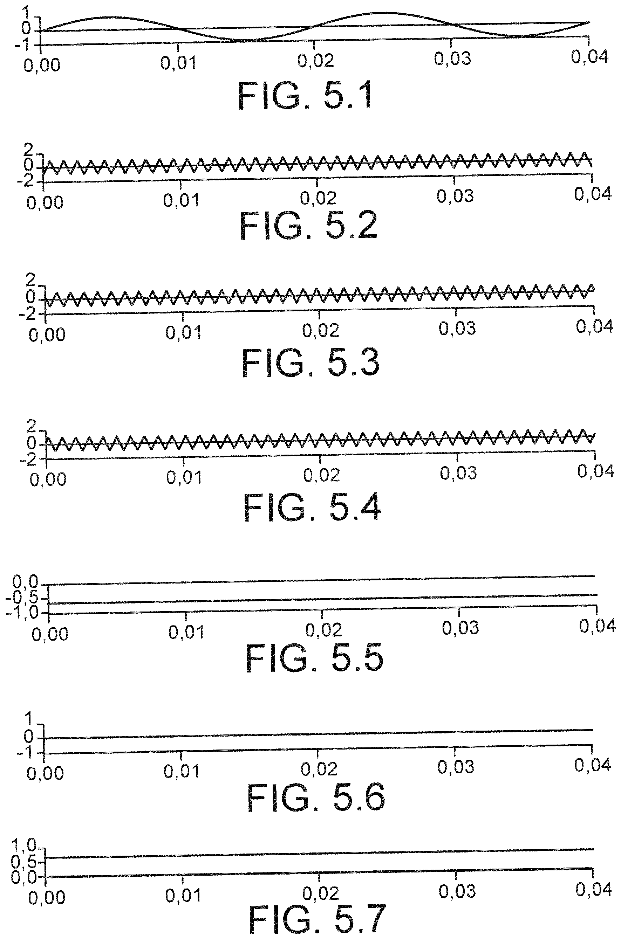

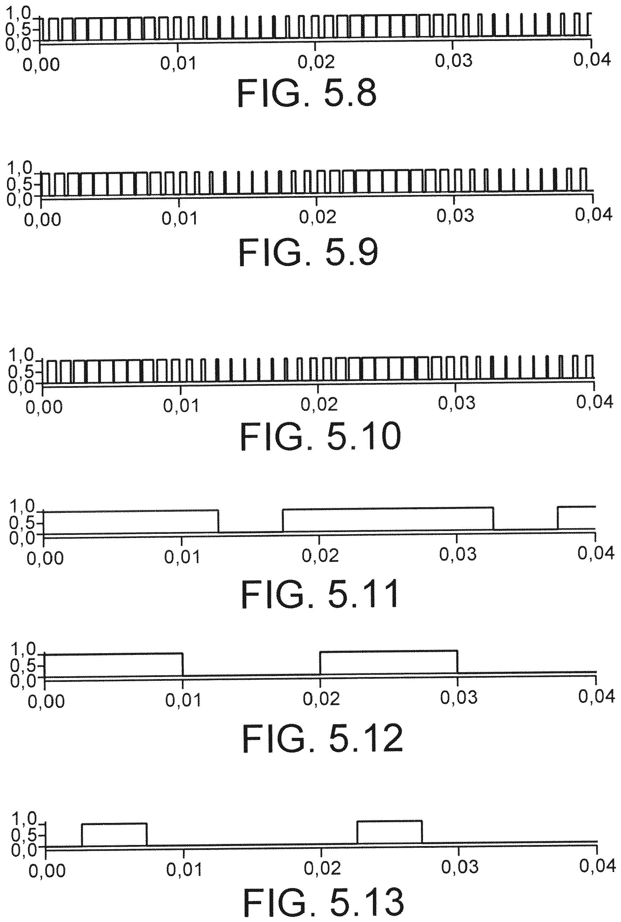

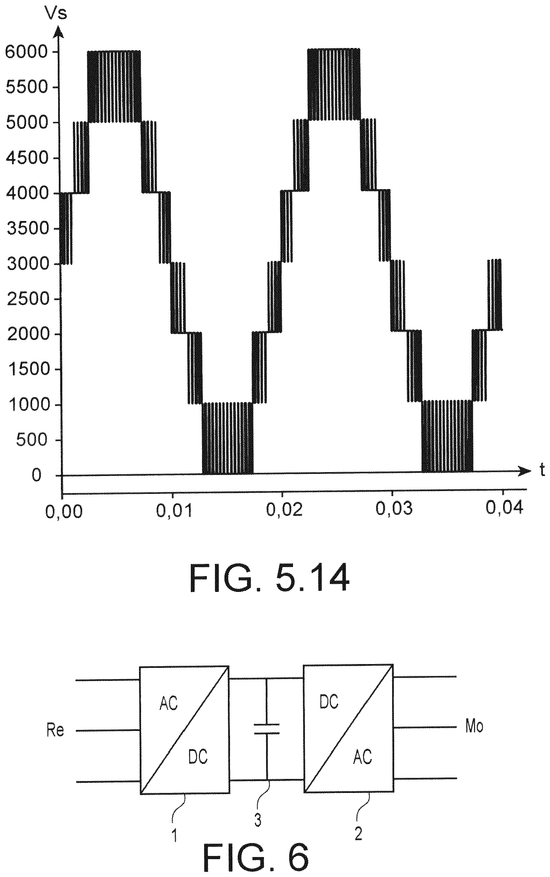

- les figures 5.1 à 5.14 illustrent des chronogrammes du signal de consigne Vref (Fig. 5.1), des porteuses utilisées avec la tension de consigne Vref pour la commande des interrupteurs élémentaires du bras du convertisseur multi-niveaux de la figure 3A : T1, T1' (Fig. 5.2), T2, T2' (Fig. 5.3), T3u, T3'u, T3l, T3'l (Fig. 5.4), T4u, T4'u, T4l, T4'l (Fig. 5.5), T5u, T5'u, T5l, T5'l (Fig. 5.6), T6u, T6'u, T6l, T6'l, T7u, T7'u, T7l, T7'l (Fig. 5.7), des fonctions de commutation utilisées pour la commande des interrupteurs élémentaires du bras du convertisseur multi-niveaux de la figure 3A: F10 (Fig. 5.8), F20 (Fig.5.9), F30 (Fig. 5.10), F40 (Fig. 5.11), F50 (Fig. 5.12), F60 (Fig.5.13), de la tension de sortie Vs du bras du convertisseur multi-niveaux de la figure 3A (Fig. 5.14) dans un fonctionnement de conversion DC/AC;
- la figure 6 illustre un exemple de variateur de vitesse associant deux convertisseurs multi-niveaux objet de l'invention, l'un fonctionnant en redresseur et l'autre en onduleur.

## EXPOSÉ DÉTAILLÉ DE MODES DE RÉALISATION PARTICULIERS

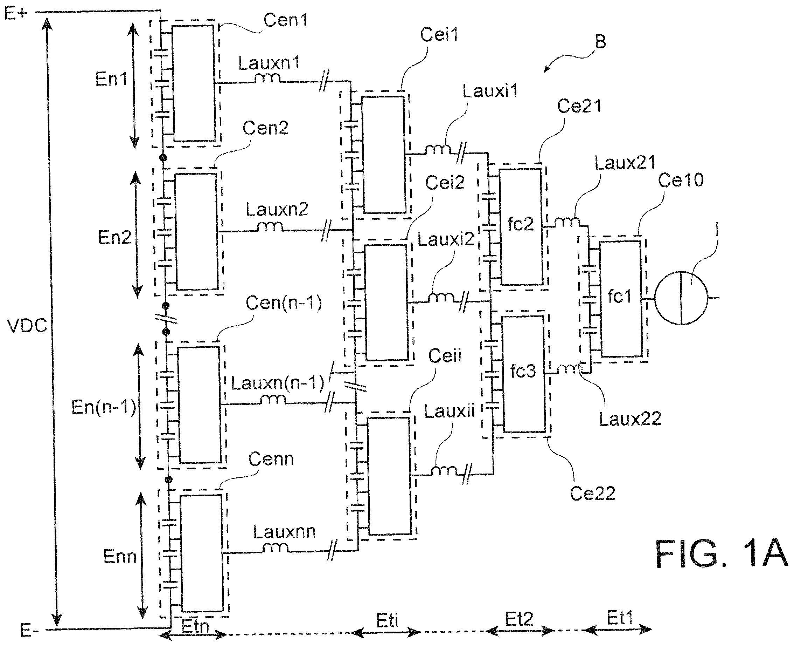

On se réfère à la figure 1A qui montre un schéma électrique d'un bras B d'un convertisseur multi-niveaux objet de l'invention, dans une structure générale. Il permet de travailler à des tensions du domaine de la moyenne tension jusqu'à environ 13,8 kV alors que la tenue en tension des interrupteurs à semi-conducteurs existants à ce jour est limitée à 6,5 kV.

Il va être décrit dans un premier temps dans un exemple d'un bras de convertisseur DC/AC.

Le convertisseur multi-niveaux objet de l'invention, comme celui illustré sur la figure 1B, comporte un ou plusieurs bras B similaires à celui représenté sur la figure 1A. Ils sont destinés à être branchés chacun entre deux mêmes sources d'alimentation électrique, parmi lesquelles une source de tension VDC et une source de courant I. Deux bras sont utilisés dans un convertisseur monophasé. Trois bras seraient utilisés dans un convertisseur triphasé.

Le bras B de la figure 1A est destiné à être connecté entre la source de tension VDC et la source de courant I. Le convertisseur peut alors fonctionner en convertisseur DC/AC (onduleur) ou bien en convertisseur AC/DC (redresseur). Dans le cas d'un convertisseur DC/AC, la source de courant est alternative et peut être par exemple un moteur électrique par exemple, et la source de tension est continue et peut être par exemple un bus à courant continu branché en sortie d'un redresseur.

Dans le cas d'un convertisseur AC/DC, la source de courant est alternative et peut être par exemple le réseau d'alimentation et la source de tension est continue et peut être par exemple un condensateur ou une batterie.

Le bras B de convertisseur comporte n étages Et1, Et2,....Eti, ....Etn connectés ensemble en cascade. n est un nombre entier supérieur ou égal à deux. Le premier étage Et1 ou étage de sortie, dans l'application onduleur, est destiné à être branché à la source de courant I. Elle est représentée formée d'une résistance R et d'une inductance L en série sur la figure 3A.

L'étage de rang n Etn ou étage d'entrée, dans l'application onduleur, est destiné à être branché à la source de tension VDC.

Dans une configuration de convertisseur AC/DC, le premier étage Et1 ou étage d'entrée serait branché à une source de courant et l'étage de rang n Etn ou étage d'entrée serait branché à une source de tension. L'entrée et la sortie du convertisseur sont inversées lorsque l'on passe du fonctionnement en onduleur au fonctionnement en redresseur et vice versa.

La description qui suit se base sur la figure 1A et le fonctionnement en tant que convertisseur DC/AC.

L'étage de rang un Et1 comporte une unique structure de commutation à quatre niveaux de tension Ce10.

Un étage de rang i (i entier compris entre 2 et n) Eti comporte i structures de commutation à quatre niveaux de tension Cei1, Cei2...Ceii, identiques, connectées en série. Chacune des i structures de commutation à quatre niveaux de tension Cei1, Cei2...Ceii de l'étage de rang i Eti est reliée par l'intermédiaire d'une inductance Lauxi1, Lauxi2, ....., Lauxii à l'étage de rang i-1. L'étage de rang i-1 n'est pas représenté. Ainsi sur la figure 1A, l'étage de rang 2, Et2 comporte deux structures de commutation à quatre niveaux de tension Ce21, Ce22 qui sont reliées via deux inductances Laux21, Laux22 à l'étage de rang 1 Et1.

L'étage de rang n Etn comporte n structures de commutation à quatre niveaux de tension Cen1, Cen2,....Cen(n-1), Cenn qui sont reliées via n inductances Lauxn1, Lauxn2,.....Lauxn(n-1), ....Lauxnn à l'étage de rang n-1. L'étage de rang i-1 n'est pas représenté. Chacune de ces inductances est assimilable à une source de courant pour respecter les règles de connexion entre source de tension et source de courant. Les inductances qui relient deux mêmes étages sont de même valeur. Par contre, des inductances qui ne relient pas deux mêmes étages n'ont pas forcément les mêmes valeurs, mais dans un souci de simplification, on peut les choisir de même valeur.

Il est possible que la liaison d'une structure de commutation d'un étage de rang quelconque à l'étage qui le précède, se fasse directement sans la présence d'une inductance. Il suffit qu'il subsiste une ou plusieurs inductances entre cet étage de rang quelconque et l'étage qui le précède. La ou les inductances qui subsistent auront alors une valeur augmentée par rapport à celle qu'elles auraient si toutes les inductances étaient présentes entre les deux étages. On fait en sorte que la valeur totale des inductances qui relient deux étages successifs soit la même quel que soit le nombre d'inductances. On a représenté pour illustrer ce principe, sur la figure 1A, l'inductance Laux22 en pointillés, ce qui signifie qu'elle peut être omise.

On s'aperçoit que la tension VDC appliquée à l'étage de rang n Etn a été scindée en n tensions égales associées en série. Ce sont les tensions d'entrées des structures de commutation à quatre niveaux de tension de l'étage de rang n. Ces tensions sont référencées En1, En2, En(n-1), Enn.

Chaque structure de commutation à quatre niveaux de tension Ce10 à Cenn comporte, comme on le verra plus loin, en se référant à la description de la figure 3A, un pont diviseur capacitif qui matérialise une source de tension. Ces ponts diviseurs capacitifs sont référencés Ca10, pour la structure de commutation à quatre niveaux de tension Ce10.

En variante, il est possible que la source de tension VDC soit formée de n sources de tension élémentaires chacune branchée à une des n structures de commutation à quatre niveaux de tension Cen1, ...Cenn de l'étage n Etn, aux bornes de chacun des ponts diviseurs capacitifs. Les tensions En1, En2, En(n-1), En sont les tensions aux bornes des ponts diviseurs capacitifs de l'étage de rang n.

Les sorties des structures de commutation à quatre niveaux de tension Cen1 à Cenn sont considérées comme des sources de tension flottantes. Elles sont connectées via les inductances aux ponts diviseurs capacitifs des structures de commutation à quatre niveaux de tension de l'étage de rang n-1. Ces structures de commutation à quatre niveaux de tension de l'étage de rang n-1 sont considérées également comme des sources de tension flottantes. Les inductances entre l'étage de rang n et l'étage de rang n-1 sont assimilables à des sources de courant pour respecter une alternance source de tension-source de courant.

On choisit les composants du nième étage Etn de manière à ce que la tension d'entrée VDC soit scindée en n tensions d'entrée égales appliquées à chacune des n structures de commutation à quatre niveaux de tension Cen1 à Cenn. On applique ainsi VDC/n sur chacune des structures de commutation à quatre niveaux de tension du nième étage Etn.

On peut définir une fonction de conversion f associée à chaque structure de commutation à quatre niveaux de tension, elle lie la tension d'entrée Ve appliquée à ladite structure de commutation à quatre niveaux de tension à la tension Vs présente en sortie de la même dite structure de commutation. Vs=f*Ve avec $-1 \leq f \leq 1$

Dans chaque étage, on configure et on commande les structures de commutation à quatre niveaux de tension manière à ce que leurs fonctions de conversion associées soient égales. De la sorte, les tensions appliquées en entrée de chacune des structures de commutation à quatre niveaux de tension sont égales à VDC/n. Toutes les structures de commutation à quatre niveaux de tension du convertisseur doivent supporter cette tension VDC/n. Cela répond à l'objectif initial de réduction des contraintes de tension sur les interrupteurs à semi-conducteurs pour une tension continue donnée appliquée à l'étage de rang n.

On va décrire, en se référant à la figure 2, une structure de commutation à quatre niveaux de tension du convertisseur multi-niveaux objet de l'invention. Cette structure de commutation à quatre niveaux de tension comporte une cellule de type à condensateur flottant 20 à trois niveaux de tension, une première et une seconde cellule de commutation de base 21 et 22 et un pont diviseur capacitif 23.

La cellule de type à condensateur flottant 20 comporte un quadruplet d'interrupteurs élémentaires montés en série dénommés K1, K2, K1', K2'. Dans ce quadruplet, un premier interrupteur élémentaire K2 et un second interrupteur élémentaire K2' sont en position extrême et un premier interrupteur élémentaire K1 et un second interrupteur élémentaire K1' sont en position médiane, les deux interrupteurs élémentaires K1, K1' en position médiane sont directement reliés l'un à l'autre en un noeud milieu M. Dans le quadruplet, un interrupteur élémentaire en position extrême est directement relié à un interrupteur élémentaire en position médiane. Cette liaison permet de définir un premier point milieu M1 entre le premier interrupteur élémentaire K2 en position extrême et le premier interrupteur élémentaire K1 en position médiane et un second point milieu M1' entre le second interrupteur élémentaire K2' en position extrême et le second interrupteur élémentaire K1' en position médiane. Les extrémités du quadruplet d'interrupteurs K1, K2, K1', K2' en série sont dénommées M2 et M2', l'extrémité M2 étant du côté de l'interrupteur élémentaire K2 et l'extrémité M2' étant du côté de l'interrupteur élémentaire K2'.

Un dispositif de stockage d'énergie C est connecté entre le premier point milieu M1 et le second point milieu M1'.

On définit deux fonctions de commutation dans la cellule de type à condensateur flottant 20. La première fonction de commutation F1 est utilisée pour la commande d'une première paire d'interrupteurs comprenant le premier interrupteur élémentaire K1 en position médiane et le second interrupteur élémentaire en position médiane K1'. La seconde fonction de commutation F2 est utilisée pour la commande d'une seconde paire d'interrupteurs comprenant le premier interrupteur élémentaire K2 en position extrême et le second interrupteur élémentaire K2' en position extrême. Les deux interrupteurs élémentaires d'une même paire sont toujours dans des états complémentaires, passant ou bloqué, à une valeur de temps mort près. Ce temps mort sera expliqué ultérieurement en relation avec les figures 5.

Les interrupteurs élémentaires K1, K2, K1', K2' de la cellule de type à condensateur flottant 20 sont des interrupteurs à semi-conducteur et comportent chacun un commutateur électronique de puissance commandable Tr1, Tr2, Tr1', Tr2', tel un transistor de puissance IGBT (Insulated Gate Bipolar Transistor) par exemple associé avec une diode D1, D2, D1', D2' connectée en antiparallèle. Au lieu des transistors IGBT, d'autres commutateurs électroniques de puissance tels des transistors MOSFET ou autres sont envisageables.

La fonction de commutation F1 vaut 1 lorsque l'interrupteur élémentaire K1 est passant et l'interrupteur élémentaire K1' est bloqué et vaut 0 lorsque l'interrupteur élémentaire K1 est bloqué et l'interrupteur élémentaire K1' est passant.

La fonction de commutation F2 vaut 1 lorsque l'interrupteur élémentaire K2 est passant et l'interrupteur élémentaire K2' est bloqué et vaut 0 lorsque l'interrupteur élémentaire K2 est bloqué et l'interrupteur élémentaire K2' est passant.

Chacune des cellules de commutation de base 21, 22 comporte une paire d'interrupteurs élémentaires montés en série. Ils sont référencés K3u, K3'u pour la première cellule de commutation de base 21 et K3l, K3'l pour la seconde cellule de commutation de base 22. Dans une paire, les deux interrupteurs élémentaires ont un point milieu. Pour la cellule de commutation de base 21, le point milieu est connecté à l'extrémité M2 du quadruplet de la cellule de type à condensateur flottant 20. Pour la cellule de commutation de base 22, le point milieu est connecté à l'extrémité M2' du quadruplet de la cellule de type à condensateur flottant 20.

Chaque cellule de commutation de base 21, 22 comporte également une première et une seconde borne extrême. La première borne extrême est dénommée M3, la seconde borne extrême est dénommée M4 pour la première cellule de commutation de base 21. La première borne extrême est dénommée M3', la seconde borne extrême est dénommée M4' pour la seconde cellule de commutation de base 22. Les deux premières bornes extrême M3 et M3' forment les deux bornes d'entrée de la structure de commutation à quatre niveaux de tension, alors que la borne M forme la borne de sortie dans un fonctionnement de conversion DC/AC.

Les interrupteurs élémentaires K3u, K3'u, K3l, K3'l des deux cellules de commutation de base 21, 22 sont également des interrupteurs à semi-conducteur et comportent chacun un commutateur électronique de puissance commandable, tel un transistor de puissance IGBT (Insulated Gate Bipolar Transistor), par exemple, associé avec une diode connectée en antiparallèle. Ces diodes et transistors de puissance n'ont pas été référencés pour ne pas surcharger la figure. Au lieu des transistors IGBT, d'autres commutateurs électroniques de puissance tels des transistors MOSFET ou autres sont également envisageables.

On définit une troisième fonction de commutation F3 pour commander les interrupteurs élémentaires des cellules de commutation de base 21 et 22. L'interrupteur élémentaire K3u et l'interrupteur élémentaire K3l sont commandés de manière identique. Les deux interrupteurs élémentaires K3u, K3'u de la cellule de commutation de base 21 sont toujours dans des états opposés. Il en est de mêmes pour les interrupteurs élémentaires K3l, K3'l de la cellule commutation de base 22.

La fonction de commutation F3 vaut 1 lorsque les interrupteurs élémentaires K3u, K3l sont passants et les interrupteurs élémentaires K3'u, K3'l sont bloqués et vaut 0 lorsque les interrupteurs élémentaires K3u, K3l sont bloqués et les interrupteurs élémentaires K3'u, K3'l sont passants.

Le pont diviseur capacitif 23 comporte un triplet de dispositifs de stockage d'énergie C100, C200 et C300 connectés en série. Le premier dispositif de stockage d'énergie C100 est monté aux bornes de la première cellule de commutation de base 21, entre ses bornes extrêmes M3, M4. Le troisième dispositif de stockage d'énergie C300 est monté aux bornes de la seconde cellule de commutation de base 22, entre sa première et sa seconde bornes extrêmes M3', M4'. Le deuxième dispositif de stockage d'énergie C200 est monté entre la première cellule de commutation de base 21 et la seconde cellule de commutation de base 22, entre les secondes bornes extrêmes de ces cellules de commutation de base. Le pont diviseur capacitif 23 possède deux bornes extrêmes M3 et M'3 qui sont communes respectivement à la première cellule de commutation de base 21 et à la seconde cellule de commutation de base 22.

Les dispositifs de stockage d'énergie de cette structure de commutation à quatre niveaux de tension sont choisis parmi un condensateur, une batterie, une pile à combustible. Les dispositifs de stockage du pont diviseur capacitif 23 ont la même capacité de stockage et une même tenue en tension.

Selon les états des interrupteurs élémentaires de la structure de commutation de la figure 2, la structure de commutation à quatre niveaux de tension peut prendre huit états différents qui conduisent à quatre niveaux de tensions différentes : 0, Ve/3, 2Ve/3, Ve.

Le tableau suivant regroupe ces huit états différents numérotés de 1 à 8. La fonction de commutation f évoquée plus haut dépend des fonctions de commutation F1, F2 et F3.

| Etat | F1 | F2 | F3 | Vs |
|------|----|----|----|-------|
| 1 | 0 | 0 | 0 | 0 |
| 2 | 1 | 0 | 1 | Ve/3 |
| 3 | 0 | 1 | 0 | Ve/3 |
| 4 | 1 | 1 | 1 | 2Ve/3 |
| 5 | 0 | 0 | 0 | Ve/3 |
| 6 | 1 | 0 | 1 | 2Ve/3 |
| 7 | 0 | 1 | 0 | 2Ve/3 |
| 8 | 1 | 1 | 1 | Ve |

Avec ce qui précède, la tension d'entrée Ve qui s'applique aux bornes du pont diviseur capacitif 23 est subdivisée en trois tensions égales E1, E2, E3 qui s'appliquent chacune respectivement aux bornes de l'un des dispositifs de stockage d'énergie C100, C200, C300. La tension de sortie Vs s'exprime par :

$$Vs = (F1+F2+F3)Ve/3$$

La tension Vs est prise entre le noeud M et le noeud M'3.

On a représenté sur la figure 4.1 l'allure du signal de consigne encore appelée tension de consigne Vref qui va servir notamment pour déterminer les instants de commutation de tous les interrupteurs élémentaires de la structure de commutation à quatre niveaux de tension illustrée à la figure 2. Cette tension de consigne Vref va être utilisée dans plusieurs comparaisons, comme on le verra ultérieurement. Elle est sinusoïdale et la tension la tension de sortie Vs qui est illustrée à la figure 4.13, est en phase avec cette tension de consigne Vref.

On a représenté sur la figure 4.2 un chronogramme de la porteuse Car1 utilisée avec la tension de consigne Vref pour réaliser la fonction de commutation F1 et déterminer les instants de commutation des interrupteurs élémentaires K1, K1' de la cellule de type à condensateur flottant 20. C'est une porteuse triangulaire dont l'amplitude est comprise entre -1 et +1.

On a représenté sur la figure 4.3 un chronogramme de la porteuse Car2 utilisée avec la tension de consigne Vref pour réaliser la fonction de commutation F2 et déterminer les instants de commutation des interrupteurs élémentaires K2, K2' de la cellule de type à condensateur flottant 20. C'est une porteuse triangulaire dont l'amplitude est comprise entre -1 et +1. Les deux porteuses Car1 et car 2 sont déphasées d'une demi-période de découpage. La fréquence de découpage est bien plus élevée que la fréquence de la tension de sortie Vs illustrée à la figure 2.

On a représenté sur la figure 4.4 un chronogramme de la porteuse Car3 utilisée avec la tension de consigne Vref pour réaliser la fonction de commutation F3 et déterminer les instants de commutation des interrupteurs élémentaires K3u, K3'u, K3l, K3'l des cellules de commutation de base 21, 22 C'est un signal constant d'amplitude 0,6.

Les instants de commutation des interrupteurs élémentaires sont obtenus par comparaison entre les porteuses triangulaires et constante et le signal de consigne Vref. On peut définir comme règle, par exemple, qu'un instant de commutation d'un interrupteur élémentaire survient dès que le signal de consigne est strictement supérieur à la porteuse. On aurait pu bien sûr fixer comme règle qu'un instant de commutation d'un interrupteur élémentaire survient dès que le signal de consigne est supérieur ou égal à la porteuse.

La figure 4.5 est un chronogramme du signal de commande de l'interrupteur élémentaire K1 de la cellule de type à condensateur flottant 20. C'est un signal en créneaux dont la période est égale à celle du signal de consigne Vref. L'interrupteur élémentaire K1 est passant tant que la tension de consigne Vref est supérieure à la porteuse Car1.

La figure 4.6 est un chronogramme du signal de commande de l'interrupteur élémentaire K1' de la cellule de type à condensateur flottant 20. C'est un signal en créneaux en opposition de phase par rapport au signal de commande de l'interrupteur élémentaire K1 à une valeur de temps mort près.

La figure 4.7 est un chronogramme du signal de commande de l'interrupteur élémentaire K2 de la cellule de type à condensateur flottant 20. C'est un signal en créneaux dont la période est égale à celle du signal de consigne Vref. L'interrupteur élémentaire K2 est passant tant que la tension de consigne Vref est supérieure à la porteuse Car2.

La figure 4.8 est un chronogramme du signal de commande de l'interrupteur élémentaire K2' de la cellule de la cellule de type à condensateur flottant 20. C'est un signal en créneaux en opposition de phase par rapport au signal de commande de l'interrupteur élémentaire K2 à une valeur de temps mort près.

La figure 4.9 est un chronogramme du signal de commande de l'interrupteur élémentaire K3u de la cellule de commutation de base 21. C'est un signal en créneaux dont la période est égale à celle du signal de consigne Vref. L'interrupteur élémentaire K3u est passant tant que la tension de consigne Vref est supérieure à la porteuse Car3. Il n'est passant qu'une seule fois par période du signal de consigne Vref.

La figure 4.10 est un chronogramme du signal de commande de l'interrupteur élémentaire K3'u de la cellule de commutation de base 21. C'est un signal en créneaux en opposition de phase par rapport au signal de commande de l'interrupteur élémentaire K3u à une valeur de temps mort près.

La figure 4.11 est un chronogramme du signal de commande de l'interrupteur élémentaire K3l de la cellule de commutation de base 22. C'est un signal en créneaux dont la période est égale à celle du signal de consigne Vref. L'interrupteur élémentaire K3l est passant tant que la tension de consigne Vref est supérieure à la porteuse Car3. Il n'est passant qu'une seule fois par période du signal de consigne Vref.

La figure 4.12 est un chronogramme du signal de commande de l'interrupteur élémentaire K3'l de la cellule de commutation de base 22. C'est un signal en créneaux en opposition de phase par rapport au signal de commande de l'interrupteur élémentaire K3l à une valeur de temps mort près.

On a représenté sur la figure 4.13 un chronogramme de la tension de sortie Vs de la structure de commutation à quatre niveaux de tension de la figure 2 sur lequel les quatre niveaux de tension sont bien visibles : 0V, 2000V, 4000V, 6000V .

On s'intéresse maintenant à un exemple de bras B de convertisseur objet de l'invention ne comportant que deux étages Et1, Et2 et donc trois structures de commutation à quatre niveaux de tension Ce10, Ce21, Ce22 comme celle décrite à la figure 2.

On va décrire succinctement ce bras en ce référant à la figure 3A. Ce bras est configuré pour effectuer une conversion DC/AC. Dans la description qui suit pour simplifier, les dispositifs de stockage d'énergie ont été appelés condensateurs. Cela n'est pas limitatif. L'unique structure de commutation à quatre niveaux de tension Ce10 de l'étage de rang un Et1 comporte une cellule de type à condensateur flottant formée des interrupteurs élémentaires extrêmes T2, T2', des interrupteurs élémentaires médians T1, T1', et du condensateur C12, une première cellule de commutation de base avec les interrupteurs élémentaires T3u et T3'u, une seconde cellule de commutation de base avec les interrupteurs élémentaires T3l et T3'l, un pont diviseur capacitif avec les condensateurs C9, C10, C11. Le condensateur C9 et le condensateur C10 ont un noeud commun N7, le condensateur C10 et le condensateur C11 ont un noeud commun N8.

La première structure de commutation à quatre niveaux de tension Ce21 du deuxième étage Et2 reliée via l'inductance Laux21 à la première cellule de commutation de base du premier étage Et1 au niveau du noeud N6 comporte une cellule de type à condensateur flottant formée des interrupteurs élémentaires extrêmes T5u, T5'u, des interrupteurs élémentaires médians T4u, T4'u, et du condensateur C7, une première cellule de commutation de base avec les interrupteurs élémentaires T6u et T6'u, une seconde cellule de commutation de base avec les interrupteurs élémentaires T7u et T7'u, un pont diviseur capacitif avec les condensateurs C1, C2, C3. Le condensateur C1 et le condensateur C2 ont un noeud commun N1, le condensateur C2 et le condensateur C3 ont un noeud commun N2.

La seconde structure de commutation à quatre niveaux de tension Ce22 du deuxième étage Et2 reliée via l'inductance Laux22 au niveau du noeud N9 à la seconde cellule de commutation de base du premier étage Et1 comporte une cellule de type à condensateur flottant formée des interrupteurs élémentaires extrêmes T5l, T5'l, des interrupteurs élémentaires médians T4l, T4'l, et du condensateur C8, une première cellule de commutation de base avec les interrupteurs élémentaires T7l et T7'l, une seconde cellule de commutation de base avec les interrupteurs élémentaires T6l et T6'l, un pont diviseur capacitif avec les condensateurs C4, C5, C6. Le condensateur C3 et le condensateur C4 ont un noeud commun N3, le condensateur C5 et le condensateur C6 ont un noeud commun N5.

Les deux ponts diviseurs capacitifs C1-C3, C4-C6 du second étage Et2 sont connectés en série.

La source de tension VDC est destinée à être branchée entre les bornes extrêmes des deux ponts diviseurs capacitifs. Ainsi la borne E+ correspond à une borne du condensateur C1 non reliée à un autre condensateur et la borne E- correspond à une borne du condensateur C6 non reliée à un autre condensateur.

Par la suite, dans un souci de simplification, la référence VDC représentera à la fois la source de tension et la tension aux bornes de cette source de tension.

La tension VDC a été scindée en deux groupes de trois tensions égales E1-E3 et E4-E6, la tension E1 s'appliquant aux bornes de condensateur C1, la tension E2 s'appliquant aux bornes de condensateur C2, la tension E3 s'appliquant aux bornes de condensateur C3, la tension E4 s'appliquant aux bornes de condensateur C4, la tension E5 s'appliquant aux bornes de condensateur C5, la tension E6 s'appliquant aux bornes de condensateur C6. La tension aux bornes du condensateur C7 est appelée E7. La tension aux bornes du condensateur C8 est appelée E8. La tension aux bornes du condensateur C12 est appelée E12.

Une tension flottante Ef est disponible entre les bornes N6, N9 des inductances Laux21, Laux22, côté structure de commutation à quatre niveaux de tension du premier étage Et1. Cette tension flottante Ef est utilisée comme tension d'entrée du premier étage Et1, elle est subdivisée en trois tensions flottantes égales E9, E10, E11 s'appliquant respectivement aux bornes des condensateurs C9, C10, C11.

On appelle fc1 la fonction de conversion qui lie la tension d'entrée Ef et la tension de sortie Es de la structure de commutation à quatre niveaux de tension Ce10 du premier étage Et1. La tension d'entrée Ef de la structure de commutation Ce10 correspond à E9+E10+E11. La tension de sortie Es de la structure de commutation Ce10 est prise entre le noeud N9 et le noeud S.

On appelle fc2 la fonction de conversion qui lie la tension d'entrée VDC/2 et la tension de sortie $V_{N3N6}$ de la première structure de commutation à quatre niveaux de tension Ce21 du deuxième étage Et2. La tension d'entrée VDC/2 de la structure de commutation à quatre niveaux de tension Ce21 correspond à E1+E2+E3. La tension de sortie $V_{N6N3}$ de la structure de conversion Ce21 est prise entre le noeud N3 et le noeud N6.

On appelle fc3 la fonction de conversion qui lie la tension d'entrée VDC/2 et la tension de sortie $V_{E-N9}$ de la deuxième structure de commutation C à quatre niveaux de tension e22 du deuxième étage Et2. La tension d'entrée VDC/2 de la structure de commutation à quatre niveaux de tension Ce22 correspond à E4+E5+E6. La tension de sortie $V_{N9E-}$ de la structure de conversion Ce22 est prise entre le noeud E- et le noeud N9.

En choisissant les composants des deux structures de commutation à quatre niveaux de tension Ce21 et Ce22 du second étage Et2 de manière que les tensions qui s'appliquent aux bornes des deux ponts diviseurs capacitifs soient bien égales à VDC/2 et en choisissant des fonctions de conversion fc2 et fc3 égales, les tensions appliquées en entrée de chacune des trois structures de commutation à quatre niveaux de tension Ce10, Ce21, Ce22 sont égales à VDC/2. Il y a une répartition équilibrée des tensions entre chaque structure de commutation à quatre niveaux de tension. Ces structures de commutation à quatre niveaux de tension n'ont alors à supporter que la moitié de la tension d'entrée, ce qui correspond à l'objectif fixé.

Sur le bras illustré à la figure 3A, les commandes des interrupteurs élémentaires T3u et T3l sont identiques, les commandes des interrupteurs élémentaires T4u et T4l sont identiques, les commandes des interrupteurs élémentaires T5u et T5l sont identiques, les commandes des interrupteurs élémentaires T6u et T6l sont identiques, les commandes des interrupteurs élémentaires T7u et T7l sont identiques. De plus, comme énoncé plus haut lors de la description de la figure 2, les commandes des interrupteurs élémentaires T6u et T7u sont identiques et les commandes des interrupteurs élémentaires T6l et T7l sont identiques.

Avec ses trois structures de commutation à quatre niveaux de tension, un tel bras B possède six fonctions de commutation F10, F20, F30, F40, F50, F60.

La fonction de commutation F10 est utilisée pour la commande de la paire d'interrupteurs élémentaires T1, T1' en position médiane de la cellule de type à condensateur flottant de la structure de commutation à quatre niveaux de tension du premier étage Et1.

La fonction de commutation F20 est utilisée pour la commande de la paire d'interrupteurs élémentaires T2, T2' en position extrême de la cellule de type à condensateur flottant de la structure de commutation à quatre niveaux de tension du premier étage Et1.

La fonction de commutation F30 est utilisée pour la commande des interrupteurs élémentaires T3u, T3'u, T3i, T3'l des cellules de commutation de base de la structure de commutation à quatre niveaux de tension du premier étage Et1.

La fonction de commutation F40 est utilisé pour la commande des paires d'interrupteurs élémentaires T4u, T4'u, T4l, T4'l en position médiane des deux cellules de type à condensateur flottant situées dans les structures de commutation à quatre niveaux de tension du deuxième étage Et2.

La fonction de commutation F50 est utilisée pour la commande des paires d'interrupteurs élémentaires T5u, T5'u, T5l, T5'l en position extrême des deux cellules de type à condensateur flottant situées dans les structures de commutation à quatre niveaux de tension du deuxième étage Et2.

La fonction de commutation F60 est utilisée pour la commande des interrupteurs élémentaires T6u, T6'u, T7u, T7'u, T7l, T7'l, T6l, T6'l des cellules de commutation de base des structures de commutation à quatre niveaux de tension du deuxième étage Et2. On peut se référer à la description de la figure 2 en ce qui concerne les valeurs prises par ces fonctions de commutation en fonction de l'état passant ou bloqué des interrupteurs élémentaires.

Le convertisseur de la figure 3A permet d'obtenir en sortie 7 niveaux de tension différents 0, VDC/6, 2VDC/6, 3VDC/6, 4VDC/6, 5VDC/6, VDC entre les noeuds S et E- et 64 états en fonction de l'état passant ou bloqué de ses interrupteurs élémentaires.

On a regroupé dans le tableau suivant les 64 états différents ainsi que les 7 niveaux de tension Vs correspondants en sortie du premier étage Et1. La tension Vs est prise entre le noeud S et la borne E-. La tension de sortie, Vs s'exprime par :

$$Vs= [F10+F20+F30+F40+F50+F60]VDC/2$$

| Etat | F10 | F20 | F30 | F40 | F50 | F60 | Vs |
|------|-----|-----|-----|-----|-----|-----|--------|
| 1 | 0 | 0 | 0 | 0 | 0 | 0 | 0 |
| 2 | 0 | 0 | 0 | 0 | 0 | 1 | VDC/6 |
| 3 | 0 | 0 | 0 | 0 | 1 | 0 | VDC/6 |
| 4 | 0 | 0 | 0 | 0 | 1 | 1 | 2VDC/6 |
| 5 | 0 | 0 | 0 | 1 | 0 | 0 | VDC/6 |
| 6 | 0 | 0 | 0 | 1 | 0 | 1 | 2VDC/6 |
| 7 | 0 | 0 | 0 | 1 | 1 | 0 | 2VDC/6 |
| 8 | 0 | 0 | 0 | 1 | 1 | 1 | 3VDC/6 |
| 9 | 0 | 0 | 1 | 0 | 0 | 0 | VDC/6 |
| 10 | 0 | 0 | 1 | 0 | 0 | 1 | 2VDC/6 |
| 11 | 0 | 0 | 1 | 0 | 1 | 0 | 2VDC/6 |
| 12 | 0 | 0 | 1 | 0 | 1 | 1 | 3VDC/6 |
| 13 | 0 | 0 | 1 | 1 | 0 | 0 | 2VDC/6 |
| 14 | 0 | 0 | 1 | 1 | 0 | 1 | 3VDC/6 |
| 15 | 0 | 0 | 1 | 1 | 1 | 0 | VDC/6 |
| 16 | 0 | 0 | 1 | 1 | 1 | 1 | 3VDC/6 |
| 17 | 0 | 1 | 0 | 0 | 0 | 0 | VDC/6 |
| 18 | 0 | 1 | 0 | 0 | 0 | 1 | 2VDC/6 |
| 19 | 0 | 1 | 0 | 0 | 1 | 0 | 2VDC/6 |
| 20 | 0 | 1 | 0 | 0 | 1 | 1 | 2VDC/6 |
| 21 | 0 | 1 | 0 | 1 | 0 | 0 | 2VDC/6 |
| 22 | 0 | 1 | 0 | 1 | 0 | 1 | 3VDC/6 |
| 23 | 0 | 1 | 0 | 1 | 1 | 0 | 3VDC/6 |
| 24 | 0 | 1 | 0 | 1 | 1 | 1 | 4VDC/6 |
| 25 | 0 | 1 | 1 | 0 | 0 | 0 | 2VDC/6 |
| 26 | 0 | 1 | 1 | 0 | 0 | 1 | 3VDC/6 |
| 27 | 0 | 1 | 1 | 0 | 1 | 0 | 3VDC/6 |
| 28 | 0 | 1 | 1 | 0 | 1 | 1 | 4VDC/6 |
| 29 | 0 | 1 | 1 | 1 | 0 | 0 | 3VDC/6 |
| 30 | 0 | 1 | 1 | 1 | 0 | 1 | 4VDC/6 |
| 31 | 0 | 1 | 1 | 1 | 1 | 0 | 4VDC/6 |

(suite)

| Etat | F10 | F20 | F30 | F40 | F50 | F60 | Vs |
|------|-----|-----|-----|-----|-----|-----|------|
| 32 | 0 | 1 | 1 | 1 | 1 | 1 | 4VDC/6 |
| 33 | 1 | 0 | 0 | 0 | 0 | 0 | VDC/6 |
| 34 | 1 | 0 | 0 | 0 | 0 | 1 | 2VDC/6 |
| 35 | 1 | 0 | 0 | 0 | 1 | 0 | 2VDC/6 |
| 36 | 1 | 0 | 0 | 0 | 1 | 1 | 3VDC/6 |
| 37 | 1 | 0 | 0 | 1 | 0 | 0 | 2VDC/6 |
| 38 | 1 | 0 | 0 | 1 | 0 | 1 | 3VDC/6 |
| 39 | 1 | 0 | 0 | 1 | 1 | 0 | 3VDC/6 |
| 40 | 1 | 0 | 0 | 1 | 1 | 1 | 4VDC/6 |
| 41 | 1 | 0 | 1 | 0 | 0 | 0 | 2VDC/6 |
| 42 | 1 | 0 | 1 | 0 | 0 | 1 | 3VDC/6 |
| 43 | 1 | 0 | 1 | 0 | 1 | 0 | 3VDC/6 |
| 44 | 1 | 0 | 1 | 0 | 1 | 1 | 4VDC/6 |
| 45 | 1 | 0 | 1 | 1 | 0 | 0 | 3VDC/6 |
| 46 | 1 | 0 | 1 | 1 | 0 | 1 | 4VDC/6 |
| 47 | 1 | 0 | 1 | 1 | 1 | 0 | 4VDC/6 |
| 48 | 1 | 0 | 1 | 1 | 1 | 1 | 4VDC/6 |
| 49 | 1 | 1 | 0 | 0 | 0 | 0 | 2VDC/6 |
| 50 | 1 | 1 | 0 | 0 | 0 | 1 | 3VDC/6 |
| 51 | 1 | 1 | 0 | 0 | 1 | 0 | 3VDC/6 |
| 52 | 1 | 1 | 0 | 0 | 1 | 1 | 4VDC/6 |
| 53 | 1 | 1 | 0 | 1 | 0 | 0 | 3VDC/6 |
| 54 | 1 | 1 | 0 | 1 | 0 | 1 | 4VDC/6 |
| 55 | 1 | 1 | 0 | 1 | 1 | 0 | 4VDC/6 |
| 56 | 1 | 1 | 0 | 1 | 1 | 1 | 4VDC/6 |
| 57 | 1 | 1 | 1 | 0 | 0 | 0 | 3VDC/6 |
| 58 | 1 | 1 | 1 | 0 | 0 | 1 | 4VDC/6 |
| 59 | 1 | 1 | 1 | 0 | 1 | 0 | 4VDC/6 |
| 60 | 1 | 1 | 1 | 0 | 1 | 1 | 5VDC/6 |
| 61 | 1 | 1 | 1 | 1 | 0 | 0 | 4VDC/6 |
| 62 | 1 | 1 | 1 | 1 | 0 | 1 | 5VDC/6 |
| 63 | 1 | 1 | 1 | 1 | 1 | 0 | 5VDC/6 |
| 64 | 1 | 1 | 1 | 1 | 1 | 1 | VDC |

En analysant ce tableau, on s'aperçoit que plusieurs états et donc plusieurs configurations des interrupteurs élémentaires conduisent à une même tension Vs. Ce degré de liberté est intéressant pour maintenir l'équilibrage des tensions flottantes. On utilisera ce degré de liberté pour maintenir l'équilibrage des tensions des condensateurs.

On a représenté sur la figure 5.1 l'allure de la tension de consigne Vref qui va servir notamment pour déterminer les instants de commutation de tous les interrupteurs élémentaires du bras B illustré à la figure 3A. Elle correspond à celle illustrée à la figure 4.1. Elle est en phase avec la tension Vs en sortie de l'étage Et1 prise entre le noeud S et le noeud E-, illustrée à la figure 5.14.

On a représenté sur la figure 5.2 un chronogramme de la porteuse Car10 utilisée avec la tension de consigne Vref pour réaliser la fonction de commutation F10 et déterminer les instants de commutation des interrupteurs élémentaires T1, T1' de la structure de commutation à quatre niveaux de tension Ce10 du premier étage Et1. C'est une porteuse triangulaire dont l'amplitude est comprise entre -1 et +1.

On a représenté sur la figure 5.3 un chronogramme de la porteuse Car20 utilisée avec la tension de consigne Vref pour réaliser la fonction de commutation F20 et déterminer les instants de commutation des interrupteurs élémentaires T2, T2' en position extrême de la cellule de type à condensateur flottant de la structure de commutation à quatre niveaux de tension Ce10 du premier étage Et1. C'est une porteuse triangulaire dont l'amplitude est comprise entre -1 et +1. La porteuse Car20 est décalée de $\pi$ ou de 1/2fsw par rapport à la porteuse Car10. La grandeur fsw représente la fréquence de découpage, elle est bien plus élevée que la fréquence de la tension de sortie Vs illustrée à la figure 5.14.

On a représenté sur la figure 5.4 un chronogramme de la porteuse Car30 utilisée avec la tension de consigne Vref pour réaliser la fonction de commutation F30 et déterminer les instants de commutation des interrupteurs élémentaires T3u, T3'u, T3l, T3'l des cellules de commutation de base de la structure de commutation à quatre niveaux de tension Ce10 du premier étage Et1. La porteuse Car30 est décalée de $\pi$/2 ou de 1/fsw par rapport à la porteuse Car10.

On a représenté sur la figure 5.5 un chronogramme de la porteuse Car40 utilisée avec la tension de consigne Vref pour réaliser la fonction de commutation F40 et déterminer les instants de commutation des interrupteurs élémentaires T4u, T4'u, T4l, T4'l en position médiane des deux cellules de type à condensateur flottant situées dans les structures de commutation à quatre niveaux de tension Ce21, Ce22 du deuxième étage Et2. C'est un signal constant d'amplitude -2/3.

On a représenté sur la figure 5.6 un chronogramme de la porteuse Car50 utilisée avec la tension de consigne Vref pour réaliser la fonction de commutation F50 et déterminer les instants de commutation des interrupteurs élémentaires T5u, T5'u, T5l, T5'l en position extrême des deux cellules de type à condensateur flottant situées dans les structures de commutation à quatre niveaux de tension Ce21, Ce22 du deuxième étage Et2. C'est un signal constant d'amplitude nulle.

On a représenté sur la figure 5.7 un chronogramme de la porteuse Car60 utilisée avec la tension de consigne Vref pour réaliser la fonction de commutation F60 et déterminer les instants de commutation des interrupteurs élémentaires T6u, T6'u, T7u, T7'u, T7l, T7'l, T6l, T6'l des cellules de commutation de base des structures de commutation à quatre niveaux de tension Ce21, Ce22. C'est un signal constant d'amplitude +2/3.

Les instants de commutation des interrupteurs élémentaires sont obtenus par comparaison entre les porteuses triangulaires et constantes et le signal de consigne Vref. On peut définir comme règle, par exemple, qu'un instant de commutation d'un interrupteur élémentaire survient dès que le signal de consigne est strictement supérieur à la porteuse. On aurait pu bien sûr fixer comme règle qu'un instant de commutation d'un interrupteur élémentaire survient dès que le signal de consigne est supérieur ou égal à la porteuse.

La figure 5.8 est un chronogramme de la fonction de commutation F10 utilisée pour la commande de la paire d'interrupteurs élémentaires T1, T1' en position médiane de la cellule de type à condensateur flottant de la structure de commutation à quatre niveaux de tension du premier étage Et1. C'est un signal en créneaux dont la période est égale à celle de la fréquence de découpage fsw. La fonction de commutation F10 est à un niveau 1 tant que la tension de consigne Vref est supérieure à la porteuse Car10.

Les commandes des deux interrupteurs T1 et T1' de la paire sont obtenues à partir de la fonction de commutation F10. La commande de l'interrupteur élémentaire T1 est similaire à la fonction de commutation F10 à la différence près que le front de montée des créneaux est retardé d'un temps mort par rapport au front de montée des créneaux de la fonction de commutation F10. Par contre le front de descente des créneaux pour la commande de l'interrupteur élémentaire T1 est synchronisé avec celui des créneaux de la fonction de commutation F10. La commande de l'interrupteur élémentaire T1' est similaire à une fonction complémentaire de la fonction de commutation F10 à la différence près que le front de montée des créneaux est retardé du temps mort par rapport au front de montée des créneaux de la fonction complémentaire. Par contre, le front de descente des créneaux pour la commande de l'interrupteur élémentaire T1' est synchronisé avec celui des créneaux de la fonction complémentaire de la fonction de commutation F10. Les deux interrupteurs élémentaires T1, T1' de la paire sont dans des états complémentaires à la valeur du temps mort près.

La figure 5.9 est un chronogramme de la fonction de commutation F20 utilisée pour la commande de la paire d'interrupteurs élémentaires T2, T2' de la structure de commutation à quatre niveaux de tension Ce10 du premier étage Et1. C'est un signal en créneaux dont la période est égale à celle de la fréquence de découpage fsw. La fonction de commutation F20 est à un niveau 1 tant que la tension de consigne Vref est supérieure à la porteuse Car20. Ce que l'on vient d'expliquer au sujet de la commande des interrupteurs élémentaires T1, T'1 et des temps morts s'applique pour la commande de la paire d'interrupteurs élémentaires T2, T'2 sur la base du signal en créneaux de la fonction de commutation F20. Les deux interrupteurs élémentaires T2, T2' de la paire sont dans des états complémentaires à la valeur du temps mort près.

La figure 5.10 est un chronogramme de la fonction de commutation F30 utilisée pour la commande des paires d'interrupteurs élémentaires (T3u, T3'u) et (T3l, T3'l) des cellules de commutation de base de la structure de commutation à quatre niveaux de tension Ce10 du premier étage Et1. C'est un signal en créneaux dont la période est égale à celle de la fréquence de découpage fsw. La fonction de commutation F30 est à un niveau 1 tant que la tension de consigne Vref est supérieure à la porteuse Car30. Ce que l'on vient d'expliquer au sujet de la commande des interrupteurs élémentaires T1, T'1 et des temps morts s'applique pour la commande des paires d'interrupteurs élémentaires (T3u, T3'u) et (T3l, T3'l) sur la base du signal en créneaux de la fonction de commutation F30. Les deux interrupteurs élémentaires de chaque paire (T3u, T3'u) et (T3l, T3'l) sont dans des états complémentaires à la valeur du temps mort près.

La figure 5.11 est un chronogramme de la fonction de commutation F40 utilisée pour la commande des paires d'interrupteurs élémentaires (T4u, T4'u) et (T4l, T4'l) en position médiane des deux cellules de type à condensateur flottant situées dans les structures de commutation à quatre niveaux de tension Ce21, Ce22 du deuxième étage Et2. C'est un signal en créneaux dont la période est égale à celle du signal de consigne Vref. La fonction de commutation F40 est à un niveau 1 tant que la tension de consigne Vref est supérieure à la porteuse Car40. Ce que l'on vient d'expliquer au sujet de la commande des interrupteurs élémentaires T1, T'1 et des temps morts s'applique pour la commande des paires d'interrupteurs élémentaires (T4u, T4'u) et (T4l, T4'l) sur la base du signal en créneaux de la fonction de commutation F40. Les deux interrupteurs élémentaires de chaque paire (T4u, T4'u) et (T4l, T4'l) sont dans des états complémentaires à la valeur du temps mort près.

La figure 5.12 est un chronogramme de la fonction de commutation F50 utilisée pour la commande des paires d'interrupteurs élémentaires (T5u, T5'u) et (T5l, T5'l) en position extême des deux cellules de type à condensateur flottant situées dans les structures de commutation à quatre niveaux de tension Ce21, Ce22 du deuxième étage Et2. C'est un signal en créneaux dont la période est égale à celle du signal de consigne Vref. La fonction de commutation F50 est à un niveau 1 tant que la tension de consigne Vref est supérieure à la porteuse Car50. Ce que l'on vient d'expliquer au sujet de la commande des interrupteurs élémentaires T1, T'1 et des temps morts s'applique pour la commande des paires d'interrupteurs élémentaires (T5u, T5'u) et (T5l, T5'l) sur la base du signal en créneaux de la fonction de commutation F50. Les deux interrupteurs élémentaires de chaque paire (T5u, T5'u) et (T5l, T5'l) sont dans des états complémentaires à la valeur du temps mort près.

La figure 5.13 est un chronogramme de la fonction de commutation F60 utilisée pour la commande des paires d'interrupteurs élémentaires (T6u, T6'u), (T7u, T7'u) et (T6l, T6'l), (T7l, T7'l) des cellules de commutation de base des structures de commutation à quatre niveaux de tension Ce21, Ce22 du deuxième étage Et2. C'est un signal en créneaux dont la période est égale à celle du signal de consigne Vref. La fonction de commutation F60 est à un niveau 1 tant que la tension de consigne Vref est supérieure à la porteuse Car60. Ce que l'on vient d'expliquer au sujet de la commande des interrupteurs élémentaires T1, T'1 et des temps morts s'applique pour la commande des paires d'interrupteurs élémentaires (T6u, T6'u), (T7u, T7'u) et (T6l, T6'l), (T7l, T7'l) sur la base du signal en créneaux de la fonction de commutation F60. Les deux interrupteurs élémentaires de chaque paire (T6u, T6'u), (T7u, T7'u) et (T6l, T6'l), (T7l, T7'l) sont dans des états complémentaires à la valeur du temps mort près.

On a représenté sur la figure 5.14 un chronogramme de la tension de sortie Vs du bras de convertisseur illustré sur la figure 3A sur lequel les sept niveaux de tension sont bien visibles : 0V, 1000V, 2000V, 3000V, 4000V, 5000V, 6000V. La tension varie par paliers, de 1000V dans l'exemple décrit.

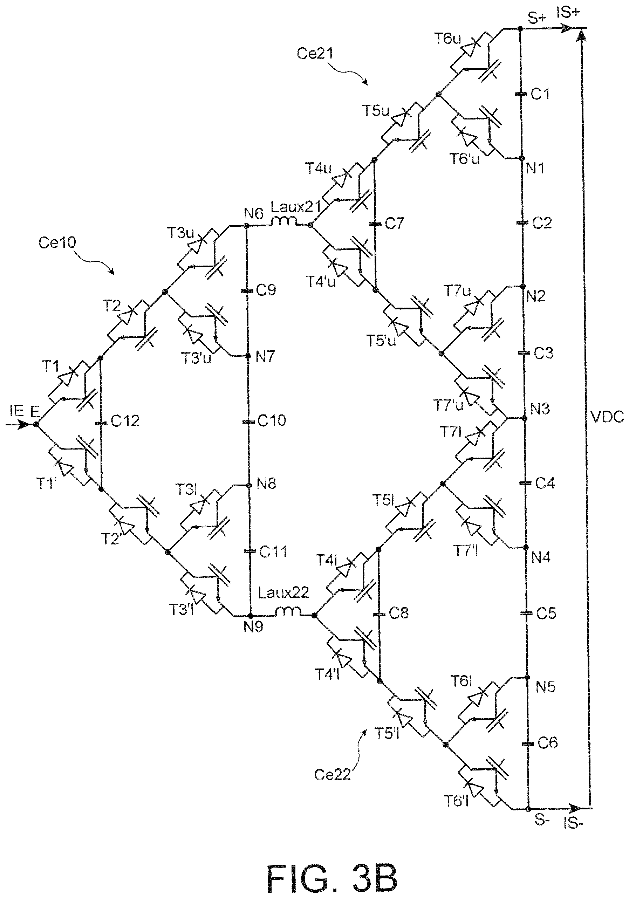

On ne va pas décrire plus en détail le bras de convertisseur de la figure 3B. Il a la même structure que celui de la figure 3A à l'exception du fait que le noeud S qui correspondait à la sortie sur la figure 3A s'appelle maintenant noeud E puisqu'il correspond maintenant à l'entrée. Il est destiné à être connecté à une source de courant alternative (non représentée). De même les bornes d'entrée E+, E- sur la figure 3A, au niveau desquelles la source de tension VDC est à brancher s'appellent maintenant S+ et S-sur la figure 3B, elles correspondent à la sortie du convertisseur et sont destinées à alimenter une source de tension continue (non représentée). En fonctionnement redresseur, un courant IE circule du noeud E vers les bornes de sortie S+ et S- alors qu'en fonctionnement onduleur des courants IE+ et IE-circulaient des bornes E+, E- vers le noeud S. En fonctionnement redresseur des courants IS+ et IS- apparaissant aux bornes S+ et S- sont des courants de sortie, et en fonctionnement onduleur le courant de sortie appelé Is apparait au noeud S.

Plusieurs types de commande peuvent être utilisés pour rendre passants ou bloqués les interrupteurs élémentaires et donc assurer la conversion. Une commande traditionnelle basée sur la modulation de largeur d'impulsion MLI peut être utilisée. Bien sûr, on commande de la même manière les interrupteurs élémentaires homologues des deux structures de commutation à quatre niveaux de tension Ce21, Ce22 du deuxième étage Et2.

Sur les figures 3A, 3B, on a représenté une seule source de tension continue VDC. Il est bien entendu que cette source de tension continue VDC pourrait être constituée de plusieurs sources de tension continues élémentaires indépendantes, chacune montée aux bornes d'au moins un dispositif de stockage d'énergie C1 à C6. Ces sources de tension continues peuvent être des redresseurs. Cette configuration est intéressante dans un système de conversion non réversible avec un transformateur à plusieurs enroulements.

En se référant à la figure 6, on a représenté un variateur de vitesse qui comporte en cascade un convertisseur 1 objet de l'invention fonctionnant en redresseur AC/DC et un convertisseur 2 objet de l'invention fonctionnant en onduleur DC/AC en plaçant entre les deux, côté continu une source de tension 3 telle un dispositif de stockage d'énergie. Le redresseur 1 est destiné à être connecté en entrée à un réseau d'alimentation électrique alternatif Re assimilable à une source de courant. L'onduleur 2 est destiné à être connecté en sortie à un dispositif utilisateur assimilable à une source de courant telle un moteur à courant alternatif Mo. La figure 6, illustre un exemple où les deux convertisseurs 1 et 2 sont triphasés. Ils comporteraient chacun trois bras tels que ceux représentés aux figures 3A, 3B.

Le convertisseur multi-niveaux objet de l'invention est bien plus compact et léger que les convertisseurs de l'art antérieur avec transformateur. Il est beaucoup plus facile à installer et à transporter. Il peut être utilisé avec ou sans transformateur d'isolement.

Il permet de minimiser la pollution harmonique du réseau électrique et la correction du facteur de puissance quand on utilise un redresseur actif régénératif. Le convertisseur objet de l'invention est compatible avec le réseau alternatif jusqu'à 13,8 kV étant donné la tenue en tension des composants semi-conducteurs existants aujourd'hui, qu'il fonctionne en onduleur ou redresseur. De ce fait, il n'est pas obligatoire d'utiliser un transformateur d'adaptation de niveau de tension, solution classiquement utilisée.

Le convertisseur DC/AC objet de l'invention peut être utilisé pour alimenter des parcs de moteurs asynchrones ou synchrones qu'ils soient neufs ou existants.

Le convertisseur objet de l'invention a une structure modulaire grâce à l'emploi des structures de commutation à quatre niveaux de tension comme celles de la figure 2. Il en résulte que les dépenses de maintenance sont réduites et que la fiabilité est bonne.

La forme d'onde d'alimentation de la charge est de bonne qualité et les surtensions côté source de courant sont limitées et ne sont liées qu'aux câbles de liaisons.

Le bus continu commun peut servir pour alimenter plusieurs convertisseurs objet de l'invention.

## DOCUMENTS CITES

[1] " A novel hybrid-clamped four-level converters", Kui Wang et al, Applied Power Electronics Conférence and Exposition (APEC), 2012 Twenty-Seventh Annual IEEE, 5-9 Feb. 2012, pages 2442-2447.

**[2]** "Voltage balancing control of a four-level hybrid-clamped inverter using modified phase-shifted PWM" Kui Wang et al, Power Electronics and Applications (EPE), 2013 15th European Conférence on Power Electronics and Applications, 2-6 Sept. 2013, pages 1-10.

## Revendications

**1.** Convertisseur multi-niveaux comportant au moins un bras (B) formé de plusieurs étages de rang un à n (n entier supérieur à un) (Et1, Et2,...., Etn) montés en cascade, l'étage de rang 1 (Et1) étant destiné à être connecté à une source de courant (I) et l'étage de rang n (Etn) étant destiné à être connecté à une source de tension (VDC), **caractérisé en ce que** l'étage de rang un (Et1) comporte une unique structure de commutation à quatre niveaux de tension (Ce10) et un étage de rang i (i compris entre deux et n) comporte i structures de commutation à quatre niveaux de tension (Cei1, Cei2, ...Ceii) identiques montées en série, chacune de ces structures de commutation comportant une cellule de type à condensateur flottant (T1, T2, T1', T2', C12) à trois niveaux de tension comprenant un quadruplet d'interrupteurs élémentaires en série (T1, T2, T1', T2') possédant un noeud milieu (S), deux cellules de base (T3u, T3'u ;T3l, T3'l) formées chacune d'une paire d'interrupteurs élémentaires (T3u, T3'u ;T3l, T3'l) en série présentant deux bornes extrêmes (N6, N7 ; N8, N9) et un point milieu et un pont diviseur capacitif (C9, C10, C11) ayant deux extrémités formé d'un triplet de dispositifs de stockage d'énergie (C9, C10, C11) montés en série parmi lesquels deux dispositifs de stockage d'énergie (C9, C11) en position extrême, chaque dispositif de stockage d'énergie (C9, C11) en position extrême étant connecté aux bornes extrêmes (N6, N9) d'une cellule de commutation de base différente, un point milieu de chaque cellule de commutation de base étant connecté à une extrémité différente du quadruplet d'interrupteurs élémentaires (T1, T2, T1', T2'), le noeud milieu de chaque cellule de type à condensateur flottant de l'étage de rang i, étant connecté à une extrémité du pont diviseur capacitif d'une structure de commutation à quatre niveaux de tension de l'étage de rang i-1.

**2.** Convertisseur multi-niveaux selon la revendication 1, dans lequel les dispositifs de stockage d'énergie (C9, C10, C11) d'un même pont diviseur capacitif ont une même capacité de stockage d'énergie et une même tenue en tension.

**3.** Convertisseur multi-niveaux selon l'une des revendications 1 ou 2, dans lequel le noeud milieu d'au moins une cellule de type à condensateur flottant de l'étage de rang i est connecté à une extrémité du pont diviseur capacitif d'une structure de commutation de l'étage de rang i-1 via une inductance (Laux21, Laux22).

4. Convertisseur multi-niveaux selon la revendication 3, dans lequel lorsque plusieurs inductances relient l'étage de rang i à l'étage de rang i-1, ces inductances ont une même valeur.

5. Convertisseur multi-niveaux selon l'une des revendications 1 à 4, dans lequel les deux paires d'interrupteurs élémentaires (T3u, T3'u ; T3l, T3'l) des deux cellules de commutation de base d'un même étage possèdent une même fonction de commutation.

6. Convertisseur multi-niveaux selon l'une des revendications 1 à 5, dans lequel en fonctionnement, les interrupteurs élémentaires d'une même paire sont dans des états complémentaires à une valeur de temps mort près.

7. Convertisseur multi-niveaux selon l'une des revendications 1 à 6, dans lequel dans le quadruplet d'interrupteurs élémentaires (T1, T2, T1', T2') d'une cellule de type à condensateur flottant deux sont en position extrême et deux sont en position médiane, les deux interrupteurs élémentaires (T2, T2') en position extrême sont toujours dans des états complémentaires et les deux interrupteurs élémentaires (T1, T1') en position médiane sont toujours dans des états complémentaires, l'un étant passant et l'autre étant bloqué.

8. Convertisseur multi-niveaux selon l'une des revendications 1 à 7, dans lequel les interrupteurs élémentaires (T1, T2, T1', T2') comportent chacun un commutateur électronique de puissance commandable avec une diode connectée en antiparallèle.

9. Convertisseur multi-niveaux selon l'une des revendications 1 à 8, dans lequel les dispositifs de stockage d'énergie (C1-C12) sont choisis parmi un condensateur, une batterie, une pile à combustible.

10. Variateur de vitesse comportant une cascade avec un convertisseur (1) selon l'une des revendications précédentes fonctionnant en redresseur AC/DC et un convertisseur (2) selon l'une des revendications précédentes fonctionnant en onduleur DC/AC, reliés entre eux par leurs côtés continu par l'intermédiaire d'une source de tension (3).

**Patentansprüche**

1. Mehrstufiger Wandler, aufweisend mindestens einen Arm (B), der von mehreren Etagen mit Rang eins bis n (n Ganzzahl größer als eins) (Et1, Et2,...., Etn) gebildet ist, die kaskadiert geschaltet sind, wobei die Etage mit Rang 1 (Et1) dazu bestimmt ist, mit einer Stromquelle (I) verbunden zu sein, und die Etage mit Rang n (Etn) dazu bestimmt ist, mit einer Spannungsquelle (VDC) verbunden zu sein, **dadurch gekennzeichnet, dass** die Etage mit Rang eins (Et1) eine einzige Schaltstruktur mit vier Spannungspegeln (Ce10) aufweist und eine Etage mit Rang i (wobei i zwischen zwei und n liegt) i identische Schaltstrukturen mit vier Spannungspegeln (Cei1, Cei2, ...Ceii) aufweist, die in Reihe geschaltet sind, jede dieser Schaltstrukturen aufweisend eine Zelle des Typs mit ungeerdetem Kondensator (T1, T2, T1', T2', C12) mit drei Spannungspegeln, umfassend ein Quadrupel von Elementarschaltern in Reihe (T1, T2, T1', T2'), aufweisend einen Mittelknoten (S), zwei Basiszellen (T3u, T3'u ;T3l, T3'l), die jeweils von einem Paar Elementarschalter (T3u, T3'u; T3l, T3'l) in Reihe gebildet sind, aufweisend zwei Endanschlüsse (N6, N7; N8, N9) und einen Mittelpunkt und eine kapazitive Teilerbrücke (C9, C10, C11) mit zwei Enden, die von einem Tripel von Energiespeichervorrichtungen (C9, C10, C11), die in Reihe geschaltet sind, gebildet ist, von denen sich zwei Energiespeichervorrichtungen (C9, C11) in Endposition befinden, wobei jede Energiespeichervorrichtung (C9, C11) in Endposition mit den Endanschlüssen (N6, N9) einer anderen Basisschaltzelle verbunden ist, wobei ein Mittelpunkt jeder Basisschaltzelle mit einem anderen Ende des Quadrupels von Elementarschaltern (T1, T2, T1', T2') verbunden ist, wobei der Mittelknoten jeder Zelle des Typs mit ungeerdetem Kondensator der Etage mit Rang i mit einem Ende der kapazitiven Teilerbrücke einer Schaltstruktur mit vier Spannungspegeln der Etage mit Rang i-1 verbunden ist.

2. Mehrstufiger Wandler nach Anspruch 1, wobei die Energiespeichervorrichtungen (C9, C10, C11) einer selben kapazitiven Teilerbrücke eine selbe Energiespeicherkapazität und eine selbe Spannungsfestigkeit aufweisen.

3. Mehrstufiger Wandler nach einem der Ansprüche 1 oder 2, wobei der Mittelknoten mindestens einer Zelle des Typs mit ungeerdetem Kondensator der Etage mit Rang i über eine Spule (Laux21, Laux22) mit einem Ende der kapazitiven Teilerbrücke einer Schaltstruktur der Etage mit Rang i-1 verbunden ist.

4. Mehrstufiger Wandler nach Anspruch 3, wobei, wenn mehrere Spulen die Etage mit Rang i mit der Etage mit Rang i-1 verbinden, diese Spulen einen selben Wert aufweisen.

5. Mehrstufiger Wandler nach einem der Ansprüche 1 bis 4, wobei die zwei Paar Elementarschalter (T3u, T3'u; T3l, T3'l) der zwei Basis-Schaltzellen einer selben Etage eine selbe Schaltfunktion aufweisen.

6. Mehrstufiger Wandler nach einem der Ansprüche 1 bis 5, wobei sich die Elementarschalter eines selben Paars im Betrieb bis auf einen Totzeitwert in ergänzenden Zuständen befinden.

7. Mehrstufiger Wandler nach einem der Ansprüche 1 bis 6, wobei sich in dem Quadrupel von Elementarschaltern (T1, T2, T1', T2') einer Zelle des Typs mit ungeerdetem Kondensator zwei in Endposition und zwei in Mittelposition befinden, wobei sich die zwei Elementarschalter (T2, T2') in Endposition immer in ergänzenden Zuständen befinden und sich die zwei Elementarschalter (T1, T1') in Mittelposition immer in ergänzenden Zuständen befinden, wobei der eine leitend und der andere gesperrt ist.

8. Mehrstufiger Wandler nach einem der Ansprüche 1 bis 7, wobei die Elementarschalter (T1, T2, T1', T2') jeweils einen elektronischen Leistungsschalter aufweisen, der mit einer Diode steuerbar ist, die antiparallel geschaltet ist.

9. Mehrstufiger Wandler nach einem der Ansprüche 1 bis 8, wobei die Energiespeichervorrichtungen (C1 - C12) aus einem Kondensator, einer Batterie, einer Brennstoffzelle gewählt sind.

10. Umrichter, aufweisend eine Kaskade mit einem Wandler (1) nach einem der vorhergehenden Ansprüche, der als AC/DC-Gleichrichter arbeitet, und einem Wandler (2) nach einem der vorhergehenden Ansprüche, der als DC/AC-Wechselrichter arbeitet, die an ihren Gleichstromseiten mittels einer Spannungsquelle (3) miteinander verbunden sind.

**Claims**

1. Multi-level converter comprising at least one arm (B) formed of several stages of rank one to n (n an integer greater than one) (Et1, Et2,...., Etn) mounted in cascade, the stage of rank 1 (Et1) being intended to be connected to a current source (I) and the stage of rank n (Etn) being intended to be connected to a voltage source (VDC), **characterized in that** the stage of rank one (Et1) comprises a single switching structure with four voltage levels (Ce10) and a stage of rank i (i lying between two and n) comprises i identical switching structures with four voltage levels (Cei1, Cei2, ...Ceii) mounted in series, each of these switching structures comprising a cell of floating capacitor type (T1, T2, T1', T2', C12) with three voltage levels comprising a quadruplet of elementary switches in series (T1, T2, T1', T2') possessing a middle node (S), two basic cells (T3u, T3'u; T3l, T3'l) each formed of a pair of elementary switches (T3u, T3'u; T3l, T3'l) in series exhibiting two extreme terminals (N6, N7; N8, N9) and a midpoint and a capacitive divider bridge (C9, C10, C11) having two ends and formed of a triplet of energy storage devices (C9, C10, C11) mounted in series, of which two energy storage devices (C9, C11) are in the extreme position, each energy storage device (C9, C11) in the extreme position being connected to the extreme terminals (N6, N9) of a different basic switching cell, a midpoint of each basic switching cell being connected to a different end of the quadruplet of elementary switches (T1, T2, T1', T2'), the middle node of each cell of floating capacitor type of the stage of rank i being connected to an end of the capacitive divider bridge of a switching structure with four voltage levels of the stage of rank i-1.

2. Multi-level converter according to Claim 1, in which the energy storage devices (C9, C10, C11) of one and the same capacitive divider bridge have one and the same energy storage capacity and one and the same voltage withstand.

3. Multi-level converter according to either of Claims 1 and 2, in which the middle node of at least one cell of floating capacitor type of the stage of rank i is connected to an end of the capacitive divider bridge of a switching structure of the stage of rank i-1 via an inductor (Laux21, Laux22).

4. Multi-level converter according to Claim 3, in which when several inductors link the stage of rank i to the stage of rank i-1, these inductors have one and the same value.

5. Multi-level converter according to one of Claims 1 to 4, in which the two pairs of elementary switches (T3u, T3'u; T3l, T3'l) of the two basic switching cells of one and the same stage possess one and the same switching function.

6. Multi-level converter according to one of Claims 1 to 5, in which during operation, the elementary switches of one and the same pair are in complementary states to within a dead time value.

7. Multi-level converter according to one of Claims 1 to 6, in which in the quadruplet of elementary switches (T1, T2, T1', T2') of a cell of floating capacitor type two are in the extreme position and two are in the median position, the two elementary switches (T2, T2') in the extreme position are always in complementary states and the two elementary switches (T1, T1') in the median position are always in complementary states, one being enabled and the other being disabled.

8. Multi-level converter according to one of Claims 1 to 7, in which the elementary switches (T1, T2, T1', T2') each comprise a controllable electronic power switch with a diode connected in antiparallel.

9. Multi-level converter according to one of Claims 1 to 8, in which the energy storage devices (C1-C12) are chosen from among a capacitor, a battery, and a fuel cell.

10. Variable speed drive comprising a cascade with a converter (1) according to one of the preceding claims operating as AC/DC rectifier and a converter (2) according to one of the preceding claims operating as DC/AC inverter, linked together by their DC sides by way of a voltage source (3).

FIG. 1A

EP 2 945 272 B1

FIG. 2

FIG. 1B

# FIG. 3A

# FIG. 3B

FIG. 4.1

FIG. 4.2

FIG. 4.3

FIG. 4.4

FIG. 4.5

FIG. 4.6

FIG. 4.7

FIG. 4.8

FIG. 4.9

FIG. 4.10

FIG. 4.11

FIG. 4.12

FIG. 4.13

FIG. 5.1

FIG. 5.2

FIG. 5.3

FIG. 5.4

FIG. 5.5

FIG. 5.6

FIG. 5.7

FIG. 5.8

FIG. 5.9

FIG. 5.10

FIG. 5.11

FIG. 5.12

FIG. 5.13

FIG. 5.14

FIG. 6

RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **KUI WANG et al.** A novel hybrid-clamped four-level converters. *Applied Power Electronics Conférence and Exposition (APEC), 2012 Twenty-Seventh Annual IEEE,* 05 Février 2012, 2442-2447

- **KUI WANG et al.** Voltage balancing control of a four-level hybrid-clamped inverter using modified phase-shifted PWM. *Power Electronics and Applications (EPE), 2013 15th European Conférence on Power Electronics and Applications,* 02 Septembre 2013, 1-10